(19) 

Europäisches Patentamt
European Patent Office
Office européen des brevets

(11) **EP 2 102 797 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: **07856601.5**

(22) Anmeldetag: **12.12.2007**

(51) Int Cl.:
*G06K 19/067* (2006.01)   *G06K 19/08* (2006.01)

(86) Internationale Anmeldenummer:
**PCT/EP2007/010853**

(87) Internationale Veröffentlichungsnummer:
**WO 2008/071406 (19.06.2008 Gazette 2008/25)**

(54) **MEHRSCHICHTKÖRPER MIT MASCHINELL AUSLESBARER CODIERUNG**

MULTILAYER STRUCTURE WITH MACHINE READABLE CODING

CORPS MULTICOUCHES AVEC UN CODAGE LISIBLE DE MANIÈRE MÉCANIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.12.2006 DE 102006059521**

(43) Veröffentlichungstag der Anmeldung:
**23.09.2009 Patentblatt 2009/39**

(73) Patentinhaber:
• **Leonhard Kurz Stiftung & Co. KG**
  **90763 Fürth (DE)**
• **Orell Füssli Security Printing Ltd.**
  **8036 Zürich (CH)**

(72) Erfinder:
• **ATTNER, Juri**
  **90559 Burgthann (DE)**

• **LUTZ, Norbert**
  **90607 Rückersdorf (DE)**
• **EICHENBERGER, Martin**
  **8702 Zollikon (CH)**
• **PETERS, John Anthony**
  **8804 Au (CH)**

(74) Vertreter: **Zinsinger, Norbert**
**Louis, Pöhlau, Lohrentz**
**Patentanwälte**
**Merianstrasse 26**
**D-90409 Nürnberg (DE)**

(56) Entgegenhaltungen:
**CA-A1- 2 191 778      US-A- 5 945 938**
**US-A1- 2002 063 156   US-A1- 2005 280 539**
**US-B1- 6 304 169**

EP 2 102 797 B1

**Beschreibung**

Die Erfindung betrifft einen Mehrschichtkörper, insbesondere ein Sicherheitselement zur Sicherung von Sicherheitsdokumenten, sowie ein Verfahren zum Auslesen einer maschinenlesbaren Codierung.

Aus DE 196 01 358 A1 und EP 1 179 811 A1 sind Sicherheitsdokumente bekannt, welche mit einer maschinell auslesbaren Codierung versehen sind.

So beschreibt DE 196 01 358 A1 eine Banknote, welche mit einem einen elektronischen Schaltkreis enthaltenden Chip und einer Antenne versehen ist. Die Antenne wird dazu verwendet, auf ein eingestrahltes RF-Signal (RF = Radio Frequency) eine in dem Silizium-Chip codierte Information aufzumodulieren, so dass ein berührungsloses Auslesen dieser Information ermöglicht wird.

Nachteilig an diesem Konzept ist, dass Sicherheitsdokumente, wie beispielsweise Banknoten, Pässe, Visa, usw., häufig über ein relativ dünnes Papier- oder Kunststoff-Trägersubstrat verfügen (üblicherweise 80 bis 200 $\mu$m), so dass die Verwendung eines in Relation zu diesem Trägersubstrat relativ dicken Silizium-Chips nicht möglich ist oder zu erheblichen Problemen bei der Handhabung des Sicherheitsdokuments führt. Im Weiteren sind Sicherheitsdokumente bei ihrer üblichen Verwendung einer Vielzahl von mechanischen Belastungen ausgesetzt, beispielsweise Biege- und Knickbelastungen, welche ein Brechen oder eine Beschädigung eines in das Trägersubstrat eingebrachten Silizium-Chips verursachen können.

Die US 2005/280539 A1 beschreibt ein RFID-Etikett zur Identifikation von Gepäckstücken. Dieses RFID-Etikett weist eine Vielzahl von Antennen-Elementen auf, die eine Polarisationsinformation auf das rückreflektierte Signal einprägen und als Dipolantenne ausgeformt sind. Die Ansprüche sind gagen dieses Dokument abgegrenzt.

Die US 2002/063156 A1 beschreibt einen aus linienförmigen, leitfähigen Bereichen aufgebauten Barcode. Dieser Barcode wird ausgelesen, indem der Barcode zwischen zwei gegenüberliegenden Dipolantennen durchgeführt wird, die von dem jeweiligen Teilbereich des Barcodes absorbierte RF-Energie bestimmt wird und hieraus auf das Vorhandensein und die Länge des leitfähigen Bereichs geschlossen wird.

Die US 6 304 169 B1 beschreibt einen RF-Tag, welcher eine Vielzahl von Resonanzschaltungen aufweist. Jede der Resonanzschaltungen enthält ein kapazitives und ein induktives Element.

Die CA 2 191 778 A1 beschreibt eine Karte, welche neben einem Magnetstreifen eine Vielzahl von Dipolen aufweist, die eine durch ein RF-Signal auslesbare Information kodieren. Diese Dipole sind in einer zufälligen Anordnung auf dem Substrat angeordnet und bestehen aus metallisierten Fäden.

Der Erfindung liegt somit die Aufgabe zugrunde, einen Mehrschichtkörper mit einer maschinell auslesbaren Codierung sowie ein Verfahren zur Auslesung einer maschinell auslesbaren Codierung anzugeben, welches die oben dargelegten Nachteile möglichst vermeidet.

Diese Aufgabe wird von einem Mehrschichtkörper nach Anspruch 1 und weiter von einem Verfahren nach Anspruch 15 gelöst.

Durch die benachbarte Anordnung der unterschiedlichen bevorzugt spulenförmigen Antennen-Strukturen wird es möglich, ohne die Verwendung einer integrierten Schaltung oder speziell bereitgestellter kapazitiver Elemente eine grosse Datenmenge in einen relativ dünnen Mehrschichtkörper maschinell auslesbar zu codieren. Dieser Mehrschichtkörper kann so auch als Sicherheitselement für dünnlagige Wertdokumente wie beispielsweise Banknoten oder Pässe dienen. Die Beständigkeit gegenüber mechanischen Belastungen ist wesentlich besser als bei der Verwendung eines (starren) Silizium-Chips. Weiterhin ist es möglich, die Leseantenne für den Empfang des rückreflektierten RF-Signals relativ klein zu halten und den maximalen Abstand, bei dem das Signal auslesbar ist, zu minimieren, so dass ein Auslesen der maschinenlesbaren Codierung durch unbefugte Dritte vermieden und damit die Datensicherheit erhöht werden kann.

Vorteilhafte Weiterbildungen der Erfindung sind in den Unteransprüchen spezifiziert.

Gemäss eines bevorzugten Ausführungsbeispiels der Erfindung sind die Antennen-Strukturen eng benachbart zueinander angeordnet. Zwei benachbarte Antennen-Strukturen sind so bevorzugt nicht mehr als 1 mm voneinander benachbart (Distanz zwischen den nächstkommenden Bereichen der beiden benachbarten spulenförmigen Antennen-Strukturen) angeordnet und verfügen bevorzugt über eine möglichst lange gemeinsame Grenzfläche.

Die spulenförmigen Strukturen bestehen bevorzugt jeweils aus einer spulenförmigen angeordneten Leiterbahn, wobei die Windungen der Leiterbahn der spulenförmigen Struktur weniger als 0,5 mm voneinander beabstandet sind, bevorzugt 0,05 bis 0,5 mm voneinander beabstandet sind.

Weiter weisen die spulenförmigen Strukturen bevorzugt einen im wesentlichen rechteckigen Aussenumriss auf, wodurch sich eine relativ lange gemeinsame Grenzlinie zu der benachbarten spulenförmigen Struktur ergibt, bei der die Leiterbahn der benachbarten spulenförmigen Strukturen enger zueinander beabstandet liegen. Die benachbarten Leiterbahnen der benachbarten spulenförmigen Strukturen besitzen in diesem Grenzbereich bevorzugt einen mittleren Abstand von weniger als 2 mm.

Durch alle diese Massnahmen wird eine gute kapazitive Kopplung zwischen den Windungen der jeweiligen spulenförmigen Struktur und zwischen den Leiterbahnen benachbarter spulenförmiger Strukturen ermöglicht, wodurch es ermöglicht wird, auf zusätzliche kapazitive Elemente zur Ausbildung eines Schwingkreises zu verzichten, der die vorbestimmten Resonanzfrequenzen aufweist.

Bei der erfindungsgemässen Anordnung der spulenförmigen Strukturen kann auf die elektrische Anbindung von speziellen, kapazitiven Elementen, beispielsweise Verbindungen der Enden der spulenförmigen Strukturen mit entsprechend einander gegenüberliegenden Kondensatorplatten, verzichtet werden. Die spulenförmigen Strukturen werden so bevorzugt nicht mit Kondensatorplatten verbunden.

Gemäss eines weiteren bevorzugten Ausführungsbeispiels der Erfindung belegen die N Antennen-Strukturen jeweils einen Flächenbereich von weniger als 20 x 20 mm.

Experimentelle Untersuchungen haben weiter gezeigt, dass folgende Grössenabmessungen der spulenförmigen Strukturen zu besonders guten Ergebnissen führen:

Die Antennen-Strukturen bestehen bevorzugt aus einer spulenförmig angeordneten Leiterbahn, die eine Breite von weniger als 5 mm, bevorzugt zwischen 0,05 und 5 mm, aufweist, die eine Windungsanzahl zwischen 2 und 30 Windungen aufweisen und bei denen die Windungen der Leiterbahn weniger als 0,5 mm, bevorzugt 0,05 bis 0,5 mm, voneinander beabstandet sind. Die Schichtdicke der zweiten Schicht, d.h. der Schicht aus einem elektrisch leitfähigen Material, beträgt bevorzugt weniger als 10 $\mu$m, vorteilhafterweise 0,1 bis 10 $\mu$m.

Durch die Dicke der leitfähigen Schicht wird im Weiteren auch die Signalstärke des rückreflektierten RF-Signals bestimmt, welche vorzugsweise ebenfalls als weiterer Parameter für die Überprüfung der Echtheit der ausgelesenen Signatur verwendet wird.

Die Herstellung von Antennen-Strukturen in sehr dünnen Metallschichten (Metallschichten kleiner als 10 $\mu$m) ist mit erheblichem produktionstechnischem Aufwand verbunden, so dass eine Fälschung der Codierung bei Evaluierung dieses zusätzlichen Parameters nur sehr schwer möglich ist.

Es bestehen mehrere bevorzugte Möglichkeiten, die N spulenförmigen Strukturen benachbart nebeneinander anzuordnen:

Zum einen ist es möglich, zwei oder mehr der N spulenförmigen Strukturen nebeneinander anzuordnen. Wie bereits oben dargestellt, ist hierbei eine möglichst lange Grenzlinie zwischen den benachbarten, spulenförmigen Strukturen vorzusehen. Weiter ist es auch möglich, zwei oder mehr der N spulenförmigen Strukturen ineinanderliegend anzuordnen, d.h. ein oder mehrere der N spulenförmigen Strukturen werden von einer oder mehreren anderen der N spulenförmigen Strukturen umschlossen. Diese Anordnung bringt weiter den Vorteil mit sich, dass hierdurch weiter eine äusserst lange Grenzlinie zwischen benachbarten Strukturen erzielt werden kann. Weiter hat es sich hierbei als vorteilhaft erwiesen, dass der Abstand zwischen der äussersten Leiterbahn der inneren Spule und der innersten Leiterbahn der äusseren Spule grösser als P = w + s (w = Breite der Leiterbahn, s = Beabstandung der Windungen innerhalb der Spulen) ist. Im Weiteren ist es vorteilhaft, die oben bereits erläuterten Grundsätze zu verwirklichen, d.h. die aneinander grenzenden Leiterbahnen der unterschiedlichen Spulen möglichst im Mittel lediglich 1 mm voneinander zu beabstanden.

Weiter ist es auch möglich, die oben geschilderten Möglichkeiten der Anordnung benachbarter spulenförmiger Strukturen miteinander zu kombinieren.

Gemäss eines weiteren bevorzugten Ausführungsbeispiels der Erfindung werden die Antennen-Strukturen in dem ersten Flächenbereich in einer regelmässigen ein- oder zweidimensionalen Anordnung gemäss eines vorbestimmten Linien- bzw. Flächenrasters angeordnet. Hierdurch wird eine enge benachbarte Anordnung der spulenförmigen Struktur erzielt (insbesondere beim Flächenraster) und die Auslegung der maschinenlesbaren Codierung erleichtert, insbesondere bei bandförmiger Gestaltung des ersten Flächenbereichs.

Im Weiteren ist es auch möglich, neben dem ersten Flächenbereich zwei oder mehr zweite Flächenbereiche in dem Mehrschichtkörper vorzusehen, die ebenfalls in Form einer Vielzahl von Antennen-Strukturen ausgeformt sind, die benachbart zueinander angeordnet sind und unterschiedliche Geometrien und unterschiedliche, vorbestimmte Resonanzfrequenzen aufweisen und eine oder mehrere weitere maschinell auslesbare Codierungen bereitstellen. Für die Ausgestaltung der ein oder mehreren zweiten Flächenbereiche gilt analog das oben Erläuterte. Weiter ist es bevorzugt, die ersten und zweiten Flächenbereiche in einer ein- oder zweidimensionalen Anordnung gemäss eines vorbestimmten Linienrasters bzw. Flächenrasters anzuordnen, wobei die Beabstandung der unterschiedlichen Flächenbereiche zueinander bevorzugt mehr als 5 mm beträgt. Hierdurch ist es möglich, mittels eines Lesekopfes unterschiedliche maschinell auslesbare Codierungen aus dem Mehrschichtkörper auszulesen, abhängig davon, über welchen Flächenbereich der Lesekopf positioniert wird. Ein Lesegerät weist so beispielsweise einen Lesekopf und eine Einrichtung zur Führung eines Sicherheitsdokuments mit dem Mehrschichtkörper in einer vorbestimmten Relativbewegung zum Lesekopf auf, wobei bei der Durchführung der Relativbewegung eine Abfolge von maschinell auslesbaren Codierungen aus dem Mehrschichtkörper ausgelesen wird, die jeweils in den unterschiedlichen Flächenbereichen enthalten sind.

Die unterschiedlichen, vorbestimmten Resonanz-Frequenzen der N Antennen-Strukturen liegen bevorzugt in einem Frequenzband von 15 MHz bis 1,5 GHz. Dieser Frequenzbereich wird in einem bevorzugten Ausführungsbeispiel der Erfindung in M Frequenzbänder unterteilt, wobei jedem der M Frequenzbänder ein Bit des zu codierenden Codewortes zugeordnet wird. In dem jeweiligen Flächenbereich wird dann im Weiteren eine spulenförmige Struktur mit einer Resonanz-Frequenz in dem jeweiligen Frequenzbereich für jedes Bit des jeweiligen Codewortes vorgesehen, welches auf den Wert 1 festgelegt ist. Vorzugsweise werden hierfür N unterschiedliche Antennen-Strukturen mit unterschiedlichen Resonanz-Frequenzen bestimmt und aus diesem Satz von N Antennen-Strukturen je nach zu generierendem Codewort eine Untermenge ausgewählt und die leitfähige Struktur in dem jeweiligen Flächenbereich entsprechend strukturiert.

Hierbei hat es sich als vorteilhaft erwiesen, die ersten und zweiten Flächenbereiche in M Unterbereiche zu unterteilen und in diesen Unterbereichen je nach zu codierenden Codierung die entsprechend zugeordnete Antennen-Struktur vorzusehen oder nicht. Weiter ist es jedoch auch möglich, eine optimierte benachbarte Antennenanordnung für jeden Wert des Coderaumes zu ermitteln und entsprechend in dem jeweiligen Flächenbereich vorzusehen.

Gemäss eines weiteren bevorzugten Ausführungsbeispiels der Erfindung weisen Teilbereiche der zweiten Schicht, d.h. der elektrisch leitfähigen Schicht, in denen kein leitfähiges Material vorgesehen ist, eine Breitenabmessung von weniger als 300 μm auf. Damit ist die Strukturierung der zweiten Schicht im ersten Flächenbereich mittels des menschlichen Auges nicht mehr auflösbar und erscheint beispielsweise als metallisch schimmernde Fläche. Die zweite Schicht bildet eine metallische Reflexionsschicht eines optisch wahrnehmbaren Sicherheitsmerkmals und damit zusätzlich eine Funktionsschicht eines optisch wahrnehmbaren Sicherheitsmerkmals . Hierdurch wird die Fälschungssicherheit des Sicherheitselements weiter verbessert und die maschinell auslesbaren Informationen gegen Manipulationsversuche geschützt. Der Mehrschichtkörper weist so bevorzugt zumindest in einem Teilbereich des ersten Flächenbereichs eine optisch aktive Schicht auf. Bei der optisch aktiven Schicht handelt es sich beispielsweise um eine Replizierlackschicht mit einem mikroskopischen oder makroskopischen Oberflächenrelief. Hierbei kommen insbesondere beugungsoptisch wirkende Oberflächenreliefs, die beispielsweise ein Hologramm oder Kinegram® generieren, oder Oberflächenreliefs in Form von (Mikro)Linsenstrukturen, Mattstrukturen oder Blaze-Gittern in Frage. Weiter ist es auch möglich, dass die optisch aktive Schicht von einer Dünnfilmschicht oder einem mehrschichtigen Dünnfilmschicht-System gebildet ist, welches vom Einfalls- oder Betrachtungswinkel abhängige Farbverschiebungseffekte zeigt. Weiter ist es auch möglich, dass die optisch aktive Schicht von einer orientierten nematischen oder cholesterischen Flüssigkristallschicht gebildet wird, welche mittels eines Polarisators erkennbare Sicherheitsmerkmale oder betrachtungswinkelabhängige Farbverschiebungseffekte zeigt. Im Weiteren ist es auch möglich, dass die optisch aktive Schicht optisch aktive Pigmente, insbesondere Effektpigmente, UV- oder IR-aktivierbare Pigmente aufweist.

Die optisch aktive Schicht oder die Strukturierung der zweiten Schicht im ersten Flächenbereich kann weiter auch eine zusätzliche, optisch auslesbare Codierung enthalten, welche zur Überprüfung der mittels des RF-Signals auslesbaren Codierung herangezogen werden kann.

Weiter ist es auch möglich, dass der Mehrschichtkörper eine dritte Schicht aus einem elektrisch leitfähigen Material aufweist, die bevorzugt auf der der zweiten Schicht gegenüberliegenden Seite der ersten Schicht aus einem dielektrischen Material vorgesehen ist. Es ist jedoch auch möglich, dass die dritte Schicht von der zweiten Schicht durch ein oder mehrere weitere Schichten elektrisch isoliert in dem Mehrschichtkörper vorgesehen ist.

Die dritte Schicht ist ähnlich der zweiten Schicht aufgebaut. Sie weist ebenso einen Flächenbereich auf, in dem die dritte Schicht in Form einer Anzahl K von Antennen-Strukturen ausgeformt ist. Die K Antennen-Strukturen sind benachbart zueinander angeordnet und weisen jeweils unterschiedliche Geometrien und unterschiedliche, vorbestimmte Resonanzfrequenzen auf. Die K Antennen-Strukturen können hierbei in der gleichen Art und Weise ausgestaltet sein wie die N Antennen-Strukuren der zweiten Schicht, insofern wird auf die Ausführungen zu den Antennen-Strukturen der zweiten Schicht verwiesen. Die K Antennen-Strukturen stellen zusammen mit den N Antennen-Strukturen der zweiten Schicht die maschinell auslesbare Codierung bereit.

Die zweite und dritte Schicht sind hierbei bevorzugt auf den beiden gegenüberliegenden Seiten einer zentralen Trägerschicht, beispielsweise einer zentralen Polyesterfolie oder eines zentralen Papierträgers angeordnet, beispielsweise auf zwei gegenüberliegenden Seiten eines Dokuments angeordnet.

Der Mehrschichtkörper wird bevorzugt von einer Transferfolie, insbesondere einer Heissprägefolie, einer Laminierfolie oder der auf einem Körper oder Dokument applizierten Übertragungslage einer Transferfolie gebildet.

Im Folgenden wird die Erfindung anhand von mehreren Ausführungsbeispielen unter Zuhilfenahme der beiliegenden Zeichnungen beispielhaft erläutert.

Fig. 1          zeigt eine Schnittdarstellung eines Sicherheitsdokuments mit einem Mehrschichtkörper.

Fig. 2          zeigt eine Draufsicht auf das Sicherheitsdokument nach Fig. 1.

Fig. 3a bis Fig. 3d    zeigen schematische, nicht massstabsgetreue Darstellungen möglicher Anordnungen von spulenförmigen Strukturen in dem ersten Flächenbereich.

Fig. 3e und Fig. 3f    zeigen schematische, nicht massstabsgetreue Darstellungen unterschiedlicher spulenförmigen Strukturen

Fig. 4          zeigt eine schematische, nicht massstabsgetreue Darstellung der Anordnung eines ersten und mehrerer zweiter Flächenbereiche mit spulenförmigen Strukturen.

Fig. 5          zeigt eine weitere schematische Darstellung einer Anordnung mehrerer spulenförmiger Strukturen.

Fig. 6          zeigt eine funktionelle Darstellung zur Verdeutlichung der Auslesung der maschinenlesbaren Codierung aus einem erfindungsgemässen Sicherheitselement.

Fig. 7 und Fig. 8          zeigen Diagramme, welche die Signalstärke des von dem Mehrschichtkörper nach Fig. 1 reflektierten RF-Signals in Abhängigkeit von der Frequenz verdeutlichen.

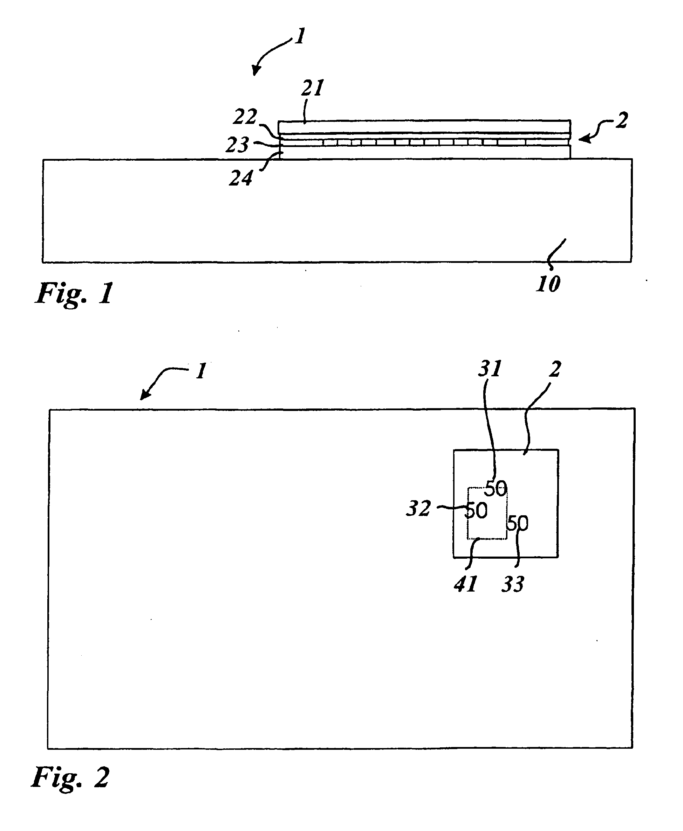

Fig. 1 und Fig. 2 zeigen ein Sicherheitsdokument 1 mit einem Trägerkörper 10 und einem auf dem Trägerkörper applizierten Sicherheitselement in Form eines Mehrschichtkörpers 2.

Bei dem Sicherheitsdokument 1 handelt es sich um eine Banknote, einen Pass, einen Führerschein oder ein sonstiges, von einer Regierungsbehörde ausgestelltes Sicherheitsdokument. Im Weiteren ist es auch möglich, dass es sich bei dem Sicherheitsdokument 1 um ein Software-Zertifikat, eine Kreditkarte, usw. handelt.

Der Trägerkörper 10 besteht vorzugsweise aus einem Papier einer Dicke von 80 bis 200 $\mu$m. Es ist jedoch auch möglich, dass der Trägerkörper 10 aus einem polymeren Trägermaterial, insbesondere einer Polyesterfolie einer Dicke von 24 bis 150 $\mu$m, oder aus einem mehrlagigen Kunststoff- und/oder Papiersubstrat besteht. Der Trägerkörper 10 ist weiter mit einer oder mehreren Druckschichten bedruckt, wobei auch vorgesehen sein kann, dass unterhalb des Sicherheitselements 2 ein oder mehrere Druckschichten vorgesehen sind oder dass das Sicherheitselement 2 teilweise oder ganz mit einer oder mehreren Druckschichten überdruckt ist. Weiter ist es möglich, dass das Sicherheitselement 2 auch in einer durch Stanzen, Blindprägung oder mittels eines Wasserzeichens in den Trägerkörper 10 eingebrachten Vertiefung appliziert ist.

Das Sicherheitselement 2 weist eine Schutzschicht 21, eine optisch aktive Schicht 22, eine Metallschicht 23 und eine Kleberschicht 24 auf. Weiter ist es möglich, dass das Sicherheitselement 2 neben diesen Schichten noch weitere Schichten umfasst, insbesondere weitere optisch aktive Schichten und/oder Haftvermittlerschichten.

Das Sicherheitselement 2 wird in den in den Fig. 1 und 2 dargestellten Ausführungsbeispielen von einer Laminierfolie gebildet, die mittels einer Kleberschicht 24 mit dem Trägerkörper 10 des Sicherheitsdokuments 1 verbunden ist. Es ist jedoch auch möglich, dass das Sicherheitselement 1 von der Transferlage einer Transferfolie gebildet wird, die beispielsweise mittels Heisssprägens auf dem Trägerkörper 10 appliziert ist.

Bei der Schutzschicht 21 handelt es sich um eine dünne Kunststofffolie, insbesondere um eine Polyesterfolie einer Dicke zwischen 12 und 42 $\mu$m, bevorzugt von 20 $\mu$m. Es ist jedoch auch möglich, dass die Schutzschicht 21 von einer Schutzlackschicht einer Dicke von 1 bis 5 $\mu$m gebildet wird.

Bei der optisch aktiven Schicht 22 handelt es sich um eine Schicht, die das optische Erscheinungsbild des Sicherheitselements 2 beeinflusst. Im einfachsten Fall handelt es sich bei der optisch aktiven Schicht 22 um eine, bevorzugt musterförmig ausgestaltete, Farblackschicht. Es ist jedoch auch möglich, dass die optisch aktive Schicht 22 ein oder mehrere optisch variable Effekte zeigt, welche als zusätzliches Sicherheitsmerkmal dienen. In diesem Fall ist die optisch aktive Schicht 22 bevorzugt mehrlagig ausgeführt.

In einem ersten Ausführungsbeispiel handelt es sich bei der optisch aktiven Schicht 22 um eine Replizierlackschicht, in die mittels UV-Replikation oder mittels eines beheizten Prägestempels ein optisch aktives Oberflächenrelief abgeformt ist, insbesondere ein diffraktives Oberflächenrelief, beispielsweise ein Hologramm, eine Mikrolinsenstruktur (Mikrolinsen mit einem Durchmesser von weniger als 300 $\mu$m, insbesondere weniger als 50 $\mu$m), einer Mattstruktur oder einem Blaze-Gitter. Weiter ist es auch möglich, dass die optisch aktive Schicht 22 ein Dünnfilmschicht-System aufweist, welches als Distanzschicht ein oder mehrere Schichten einer optisch wirksamen Dicke von $\lambda/4$ oder $\lambda/2$ enthält, wobei $\lambda$ im Wellenlängenbereich des für den menschlichen Betrachter sichtbaren Lichtes liegt und damit ein von dem Betrachter wahrnehmbarer Farbwechseleffekt durch die optisch aktive Schicht 22 generiert wird.

Weiter ist es auch möglich, dass die optisch aktive Schicht 22 eine orientierte und vernetzte Flüssigkristallschicht aufweist, die beispielsweise in verschiedenen Bereichen unterschiedlich orientiert ist, wodurch das einfallende Licht in verschiedenen Bereichen unterschiedlich polarisiert wird. Weiter kann ein cholesterisches Flüssigkristallmaterial verwendet werden, welches aufgrund seiner helikalen Struktur ebenfalls einen blickwinkelabhängigen Farbverschiebungseffekt zeigt.

Weiter ist es auch möglich, dass die optisch aktive Schicht 22 ein Bindemittel mit optisch aktiven Pigmenten, insbesondere Effektpigmenten wie Dünnfilmschicht-Pigmente oder Flüssigkristall-Pigmente oder auch UV- oder IR-aktive, lumineszente Pigmente enthält.

Die optisch aktive Schicht 22 kann auch eine Kombination der oben dargelegten Schichten umfassen.

Auf die Schicht 22 kann auch verzichtet werden.

Bei der metallischen Schicht 23 handelt es sich um eine Schicht aus einem metallischen, elektrisch leitenden Material, beispielsweise aus Aluminium, Kupfer, Silber, Chrom, Gold oder einer Metalllegierung. Die Schichtdicke der Schicht 23 ist vorzugsweise dicker als 0,5 $\mu$m, um eine ausreichende elektrische Leitfähigkeit zur Reflexion des RF-Signals zu gewährleisten. Die Metallschicht 23 weist in dem Ausführungsbeispiel nach Fig. 1 so eine Dicke zwischen 0,1 und 10 μm auf.

Wie auch in Fig. 1 angedeutet, ist die metallische Schicht 23 nicht als vollflächige, sondern als partiell ausgeformte Schicht in dem Sicherheitselement 2 vorgesehen. So wird beispielsweise auf die Schicht 22 eine vollflächige Metallschicht aufgebracht und anschliessend partiell entfernt, beispielsweise durch Positiv-/Negativ-Ätzen, Laser-Ablation oder mittels eines mechanischen Verfahrens. Weiter ist es auch möglich, dass die Metallschicht in einem weiteren Verfahrensschritt dann noch galvanisch verstärkt wird.

Alternativ dazu ist es auch möglich, dass die Metallschicht 23 in einem separaten Herstellungsprozess gefertigt wird (beispielsweise Strukturierung mittels eines Stanz-/Ätzverfahrens) und anschliessend auf die Schicht 22 laminiert wird. Weiter ist es auch möglich, dass anstelle einer metallischen Schicht eine strukturierte Schicht aus einem anderen, elektrisch leitfähigen Material, beispielsweise einem elektrisch leitfähigen Polymer oder einem transparenten, elektrisch leitfähigen Material, beispielsweise ITO, gebildet wird. Weiter ist es auch möglich, dass die Strukturierung der Schicht 23 durch den strukturierten Aufdruck einer elektrisch leitfähigen Tinte erfolgt.

In einem Flächenbereich 41 ist die metallische Schicht 23 in Form einer Vielzahl von N spulenförmigen Strukturen ausgeformt, wobei die N spulenförmigen Strukturen benachbart zueinander angeordnet sind und die N spulenförmigen Strukturen jeweils unterschiedliche Geometrien und unterschiedliche, vorbestimmte Resonanzfrequenzen aufweisen. Benachbart bedeutet hierbei, dass die spulenförmigen Strukturen nicht mehr als 1 mm voneinander beabstandet sind. $N \geq 2$. Die Geometrie der N spulenförmigen Strukturen ist hierbei bevorzugt so gewählt, dass ihre Resonanzfrequenz zwischen 15 MHz und 1,5 GHz liegt.

Die Resonanzfrequenz eines elektrischen Schwingkreises wird üblicherweise durch die Gleichung

$$f = (2\pi)^{-1}(LC)^{-0.5}$$

bestimmt, wobei L die Induktivität und C die Kapazität des Schwingkreises ist. Die Induktivität und auch die Kapazität der N spulenförmigen Strukturen werden hierbei durch die Selbstinduktivität und Kapazität zwischen den leitfähigen Bahnen der N spulenförmigen Strukturen und damit durch die Geometrie und Dimensionierung der leitfähigen Bahnen bestimmt, die die N spulenförmigen Strukturen bilden.

Anders als bei einem üblichen RFID-Schwingkreis wird der Schwingkreis somit nicht durch eine Antennenspule und einem aus gegenüberliegenden Kondensatorplatten gebildeten Kondensator aufgebaut, sondern die Resonanzfrequenz wird ausschliesslich durch die Selbstinduktivität und Kapazität der benachbarten Leiterbahnen bestimmt. Hierzu werden die spulenförmigen Strukturen bevorzugt so klein gewählt, dass der Flächenbereich der spulenförmigen Strukturen jeweils weniger als 20 x 20 mm, vorzugsweise weniger als 5 x 5 mm, beträgt.

Bei dieser Grössenabmessung sind die klassischen Gleichungen zur Bestimmung der Induktivität nicht mehr gültig.

Experimentelle Untersuchungen haben weiter gezeigt, dass spulenförmige Strukturen, die weiter die im Folgenden angeführten Parameter erfüllen, besonders geeignet sind, um die unterschiedlichen Resonanzfrequenzen in dem oben dargelegten Frequenzbereich zu realisieren:

Dicke der Schicht 23: 0,1 bis 10 μm

Bildung der spulenförmigen Strukturen aus T-Windungen, mit einer Breite der Leiterbahnen von w und einer Beabstandung der Leiterbahnen von s, wobei T = 1 bis 30 Windungen, w = 0,05 bis 5 mm und s = 0,05 bis 0,5 mm.

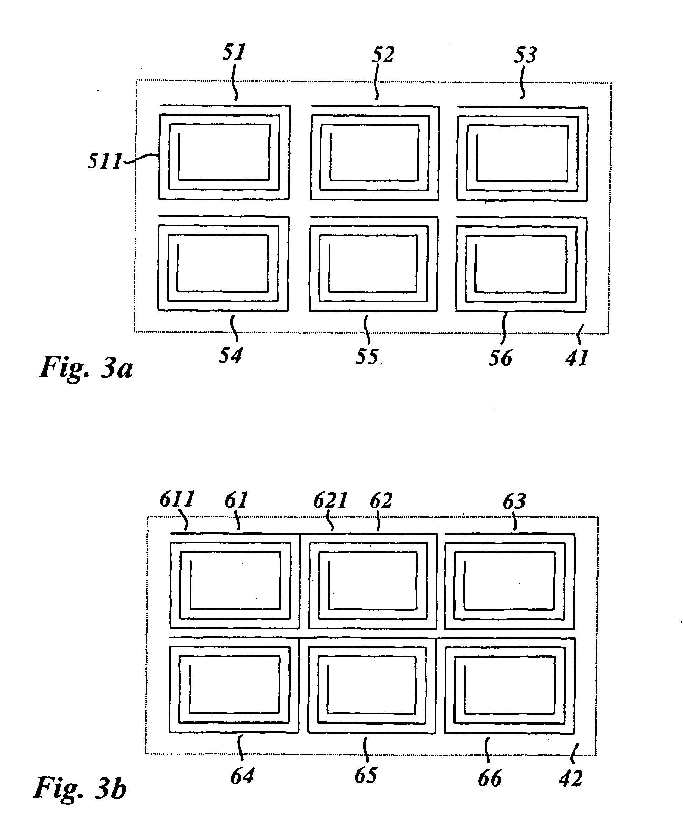

Die N spulenförmigen Strukturen sind hierbei bevorzugt nebeneinander und eng benachbart zueinander angeordnet. So zeigt beispielsweise Fig. 3a einen Flächenbereich 41, in dem N = 6 spulenförmige Strukturen 51 bis 56 in einer Anordnung gemäss eines zweidimensionalen Flächenrasters in der Schicht 23 ausgeformt sind. Die spulenförmigen Strukturen 51 bis 56 werden jeweils von einer Leiterbahn gebildet, die spulenförmig in mehreren Windungen vorgesehen ist und deren beiden Enden frei liegen, d.h. nicht mit weiteren leitfähigen Strukturen elektrisch leitend verbunden sind. Die spulenförmige Struktur 51 wird so beispielsweise wie in Fig. 3a gezeigt von einer Leiterbahn 511 gebildet, die in Form einer aus rechteckförmigen Elementen zusammengesetzten Spirale geformt ist. Die anderen spulenförmigen Strukturen 52 bis 56 des Flächenbereichs 41 unterscheiden sich - was in Fig. 3a nicht zeichnerisch umgesetzt ist - in ihrer Geometrie von der spulenförmigen Struktur 51. So stimmen beispielsweise die Aussenabmessungen der spulenförmigen Strukturen 51 bis 56 überein, die spulenförmigen Strukturen unterscheiden sich jedoch beispielsweise in der Anzahl der Windungen T, der Breite w der Leiterbahnen und/oder der Beabstandung s der Leiterbahnen. Hierbei ist es beispielsweise möglich, durch die Änderung der Anzahl der Windungen T die Induktivität und die Kapazität und durch die Änderung der Beabstandung s der Leiterbahnen voneinander die Kapazität der jeweiligen spulenförmigen Struktur zu beeinflussen und so die Resonanzfrequenz der jeweiligen spulenförmigen Struktur auf einen vorbestimmten Wert einzustellen. Weiter kann die Selbst-Kapazität der spulenförmigen Strukturen 51 bis 56 dadurch vergrössert werden, dass die Beabstandung der spulenförmigen Strukturen voneinander verkleinert und die Grenzlinie zwischen den Leiterbahnen der unterschiedlichen spulenförmigen Strukturen 51 bis 56 verlängert wird. So ist es beispielsweise in der in Fig. 3a dargestellten Anordnung vorteilhaft, die spulenförmigen Strukturen 51 bis 56 gemäss eines zweidimensionalen Rasters mit einem Rasterabstand von 5 bis 10 mm auszurichten, wobei die Aussenseiten der Bahnen der spulenförmigen Strukturen 51 bis 56 0,5 bis 1 mm voneinander entfernt sind.

Weiter ist es auch möglich, dass - wie in Fig. 3b gezeigt - ein oder mehrere der N spulenförmigen Strukturen elektrisch leitend miteinander verbunden sind. So zeigt Fig. 3b einen Flächenbereich 42 mit spulenförmigen Strukturen 61 bis 66, bei dem die spulenförmigen Strukturen 61 und 62 einerseits und 64 bis 66 andererseits elektrisch leitend miteinander verbunden sind. Um unterschiedliche Resonanzfrequenzen durch die spulenförmigen Strukturen 61 bis 66 zu erzielen, ist es jedoch erforderlich, dass zumindest ein Ende der Leiterbahn, die die jeweilige spulenförmige Struktur ausbildet, nicht mit einer der anderen spulenförmigen Strukturen unmittelbar elektrisch leitend verbunden ist.

Fig. 3b zeigt so beispielsweise, dass bei den spulenförmigen Strukturen 61 und 62 jeweils ein Ende, nämlich das bezüglich der spulenförmigen Struktur innenliegende Ende, nicht mit weiteren spulenförmigen Strukturen kontaktiert ist.

Durch die elektrische Kontaktierung benachbarter spulenförmiger Strukturen wird hierbei der Vorteil erzielt, das die Packungsdichte der spulenförmigen Strukturen erhöht werden kann. Bei dieser Ausführungsform ist es weiter vorteilhaft, die Leiterbahnen der spulenförmigen Strukturen mit einer Dicke von mehr als 1 μm auszuführen, um die bei dieser Schaltungsanordnung auftretende erhöhte Dämpfung des Schwingkreises zu kompensieren.

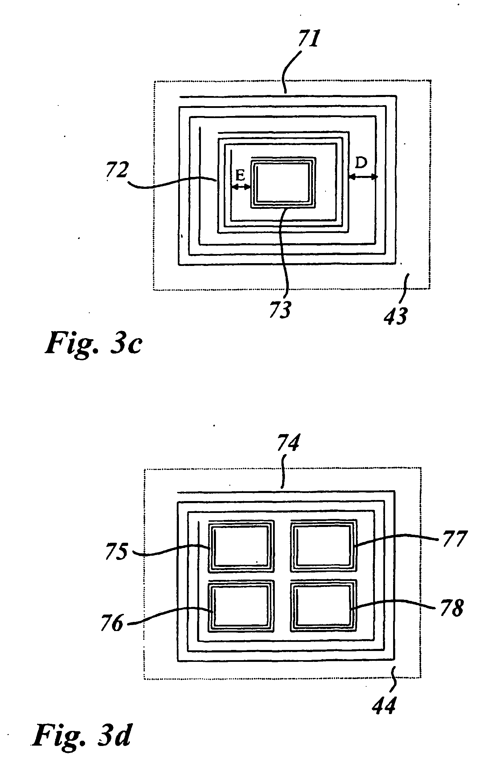

Weiter ist es auch möglich, dass spulenförmige Strukturen ineinander liegend zueinander angeordnet sind. So zeigt Fig. 3c einen Flächenbereich 43, der drei spulenförmige Strukturen 71 bis 73 aufweist, wobei die spulenförmigen Strukturen 72 und 73 innerhalb der spulenförmigen Struktur 71 und die spulenförmige Struktur 73 innerhalb der spulenförmigen Struktur 72 angeordnet ist. Wie in Fig. 3c angedeutet, sind hierbei die spulenförmigen Strukturen 71 und 72 durch einen Abstand D und die spulenförmigen Strukturen 72 und 73 durch einen Abstand E voneinander beabstandet. Die Abstände D und E werden hierbei vorzugsweise so gewählt, dass dieser Abstand grösser als w + s der beiden benachbarten spulenförmigen Strukturen ist, wobei w die Breite der Leiterbahn und s den Abstand der Windungen der Leiterbahn darstellt.

Fig. 3d zeigt eine weitere mögliche Anordnung der N spulenförmigen Strukturen. Fig. 3d zeigt einen Flächenbereich 44 mit spulenförmigen Strukturen 74 bis 78, wobei die spulenförmigen Strukturen 75 bis 78 nebeneinander angeordnet sind und die spulenförmige Struktur 74 diese Anordnung umschliesst, d.h. die spulenförmigen Strukturen 75 bis 78 in der spulenförmigen Struktur 74 angeordnet sind.

Die Anordnung gemäss Fig. 3c und Fig. 3d bringt den Vorteil mit sich, dass hierdurch die Kapazität der einzelnen spulenförmigen Strukturen erhöht und die Induktivitätsunterschiede der unterschiedlichen spulenförmigen Strukturen trotz eng benachbarter Anordnung vergrössert werden können. Damit sind die Anordnungen nach Fig. 3c und Fig. 3d insbesondere dann von Vorteil, wenn ein grösserer Frequenzbereich abzudecken ist, d.h. der Abstand zwischen den vorbestimmten Resonanzfrequenzen der spulenförmigen Strukturen vergrössert werden soll.

Zur Ermittlung des genauen Designs der N spulenförmigen Strukturen ist es hierbei vorteilhaft, die Design-Parameter innerhalb der oben angegebenen Grenzen erst grob durch entsprechende Berechnung der Parameter T, s und w der einzelnen spulenförmigen Strukturen festzulegen und hierbei zuerst lediglich die aus der Geometrie resultierende Induktivität und Zwischenwindungs-Kapazität zu berücksichtigen. Anschliessend kann dann durch Simulation bzw. durch experimentellen Aufbau das Zusammenwirken der einzelnen spulenförmigen Strukturen berücksichtigt und die Parameter, insbesondere die Parameter T sowie die Beabstandung der einzelnen benachbarten spulenförmigen Strukturen voneinander, so verändert werden, dass das gewünschte Resonanzmuster erreicht wird.

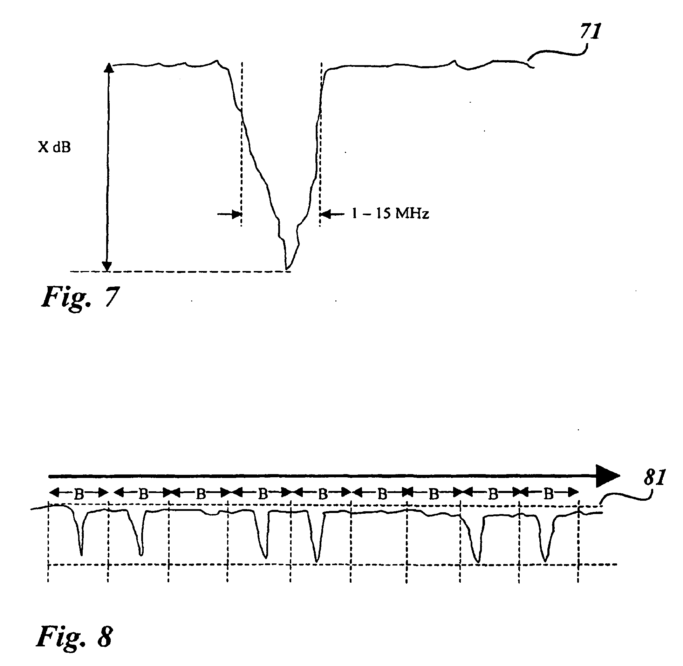

So ergibt sich beispielsweise bei einer spulenförmigen Struktur einer Aussenabmessung von 20 x 20 mm (T = 5 Windungen, w = 1 mm und s = 0,3 mm), die in einer aus Kupfer gebildeten metallischen Schicht einer Schichtdicke von 1 μm abgeformt ist, welche zwischen einer Polyesterschicht (PET) einer Dicke von 20 μm und einer Kleberschicht angeordnet ist, durch die das Sicherheitselement auf einen Papierträger einer Dicke von 100 μm festgelegt ist, eine Kapazität von 1,4 pF (Zwischenwindungs-Kapazität weiter auch durch den Papierträger und Polyester beeinflusst). Hieraus resultiert dann eine Resonanzfrequenz von 384 MHz. Wird dieses Sicherheitselement mit einem breitbandigen RF-Signal bestrahlt, welches beispielsweise Frequenzbereiche im Frequenzspektrum von 15 MHz bis 1,5 GHz abdeckt, so zeigt das von diesem Sicherheitselement rückreflektierte RF-Signal im Bereich der Resonanzfrequenz den in Fig. 7 dargestellten Signalverlauf 71, d.h. um die Resonanzfrequenz von 384 MHz ist eine Minima der Signalstärke innerhalb eines typischen Bandes von etwa 1 bis 15 MHz erkennbar.

Durch entsprechende Änderung, insbesondere der Parameter T und s, sind ausgehend von dem oben dargelegten Ausführungsbeispiel und der hierfür ermittelten Kapazität und Resonanzfrequenz eine Vielzahl von weiteren spulenförmigen Strukturen bestimmbar, welche eine sich von der Resonanzfrequenz der oben beschriebenen spulenförmigen Struktur unterscheidende, innerhalb des gewünschten Frequenzbandes liegende Resonanzfrequenz besitzen.

Weiter hat es sich als vorteilhaft erwiesen, das Frequenzband, welches für die Codierung der maschinell auslesbaren Codierung verwendet werden soll, in eine Vielzahl von Kanälen gleicher Bandbreite B zu unterteilen, wobei die Bandbreite B bevorzugt in etwa 4x so gross wie die Bandbreite des im Bereich der Resonanzfrequenz erzeugten Minima der Signalstärke des rückreflektierten RF-Signals ist, also beispielsweise B = 4x 15 MHz = 60 MHz ist.

Wird so beispielsweise ein Frequenzanalysator verwendet, der Frequenzen im Bereich von 30 MHz bis 930 MHz verarbeiten kann, so wird das zur Verfügung stehende Frequenzband in beispielsweise 15 Kanäle entsprechend den Frequenzen $f_1 = 60 (\pm 30)$ MHz, $f_2 = 120 (\pm 30)$ MHz, $f_3 = 180 (\pm 30)$ MHz, ... $f_{15} = 930 (\pm 30)$ MHz unterteilt.

Wenn das Sicherheitselement eine spulenförmige Struktur besitzt, die so ausgelegt ist, dass sie eine Resonanzfrequenz $f_i$ besitzt, so wird der Kanal, der der Frequenz $f_i$ entspricht, ein "1" Bit zugeordnet. Weiter wird allen Kanälen, in denen keine Resonanzfrequenzen von dem Frequenz-Analysator detektiert wird, ein "0" Bit zugeordnet.

So zeigt Fig. 8 einen Signalverlauf 81, der die Signalstärke des rückreflektierten RF-Signals in Abhängigkeit von der Frequenz verdeutlicht. Wie in Fig. 8 gezeigt, ist das zur Verfügung stehende Frequenzband in mehrere Kanäle unterteilt, denen jeweils ein Frequenzband einer Breite B zugeordnet ist. Fig. 8 zeigt ausschnittsweise den Signalverlauf in den ersten 9 von insgesamt 15 Kanälen eines 15 Bits umfassenden Codewortes, welches von einer 3 x 3 oder 1 x 9 Matrix von neun spulenförmigen Strukturen bereitgestellt wird. Wie in Fig. 8 gezeigt, wird das Frequenzspektrum des von dem Sicherheitselement reflektierten RF-Signals analysiert, diejenigen Frequenzbänder ermittelt, in denen lokale Minima durch Resonanz eines der spulenförmigen Strukturen verwirkt werden und dann dem zugeordneten Kanal entsprechend ein "1" Bitwert zugeordnet.

Weiter ist es auch möglich, dass für die in dem Flächenbereich bereitgestellte maschinenlesbare Codierung jeweils nur eine Untermenge von unterschiedlichen Spulen zur Verfügung gestellt wird, beispielsweise in dem Flächenbereich stets lediglich nur neun Spulen zur Codierung eines 15 Bit Codewortes verwendet werden. Bei einem auf 15 Kanälen basierenden Codewort ist es durch Verwendung von n spulenförmigen Strukturen möglich

$$\Sigma\ (15\ !)\ /\ (n\ !\ 15 - n)\ !)$$

unterschiedliche Codeworte zu codieren.

Weiter ist es auch möglich, neben einem ersten Flächenbereich mit benachbart angeordneten spulenförmigen Strukturen in dem Sicherheitselement noch weitere Flächenbereiche mit derartigen Strukturen vorzusehen und so in Abhängigkeit von der Position des Lesekopfes unterschiedliche Codierungen aus dem Sicherheitselement auszulesen.

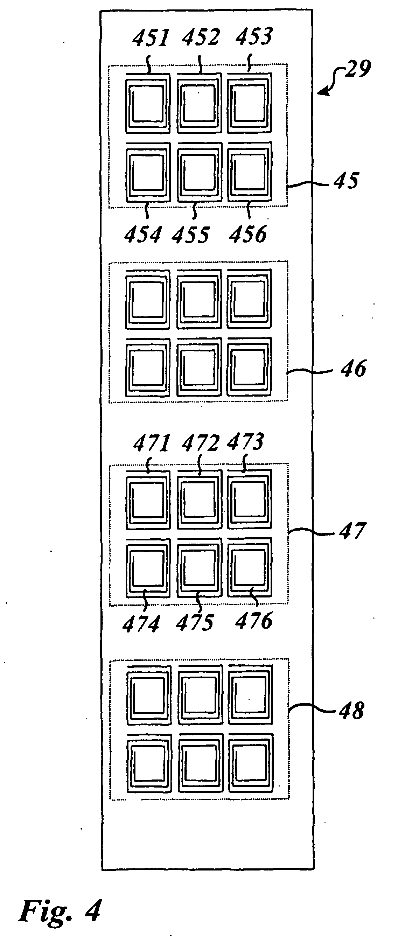

So zeigt Fig. 4 eine schematische Darstellung eines Sicherheitselements 29, welches wie das Sicherheitselement 2 nach Fig. 1 aufgebaut ist, mit dem Unterschied, dass neben einem ersten Flächenbereich 45, in dem benachbarte spulenförmige Strukturen wie in den Flächenbereichen 41 bis 44 vorgesehen sind, weitere derartige Flächenbereiche mit benachbarten spulenförmigen Strukturen vorgesehen sind. Bei dem Ausführungsbeispiel nach Fig. 4 sind die Flächenbereiche 45 bis 48 jeweils bandförmig in einem regelmässigen, eindimensionalen Raster angeordnet, wobei der Abstand zwischen den Flächenbereichen so gross gewählt ist, dass eine Auslesung der unterschiedlichen, in den Flächenbereichen 45 bis 48 codierten Information nicht möglich ist. Die Flächenbereiche 45 bis 48 sind so jeweils zwischen 2 und 10 mm voneinander beabstandet. Wird so der Lesekopf nacheinander über die Flächenbereiche 45 bis 48 des Sicherheitselements 29 geführt, so werden nacheinander vier unterschiedliche Codeworte ausgelesen, wobei beispielsweise das erste Codewort von den spulenförmigen Strukturen 451 bis 456 des Flächenbereichs 45 und das dritte Codewort von den spulenförmigen Strukturen 471 bis 476 des Flächenbereichs 47 bereitgestellt wird.

Wie in Fig. 2 dargestellt, werden von dem Sicherheitselement 2 im weiteren noch mehrere optisch erkennbare Sicherheitselement generiert, die bevorzugt den Flächenbereich 41 zumindest partiell überdecken. So zeigt Fig. 2 mehrere optisch variable Sicherheitsmerkmale 31, 32 und 33, von denen das Sicherheitsmerkmal 32 in dem Flächenbereich 41 angeordnet ist, das Sicherheitsmerkmal 31 teilweise in dem Flächenbereich 41 angeordnet ist und das Sicherheitsmerkmal 33 ausserhalb des Flächenbereichs 41 angeordnet ist. Weiter ist es auch möglich, das Design der spulenförmigen Strukturen so zu gestalten, dass diese sowohl eine maschinenauslesbare Codierung bereitstellen, als auch eine optisch wahrnehmbare Information vermitteln.

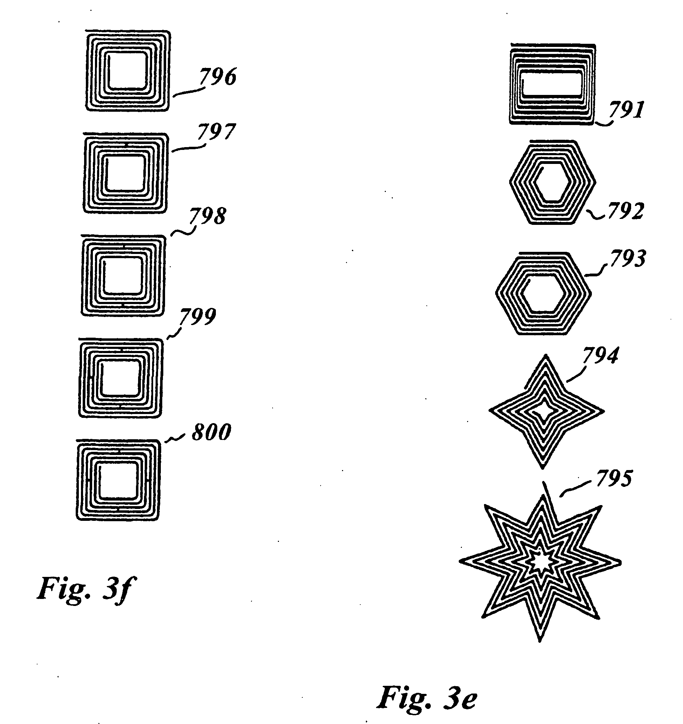

So zeigt beispielsweise die Fig. 3e unterschiedlich gestaltete Ausbildungen von spulenförmigen Strukturen 791, 792, 793, 794 und 795. Die spulenförmigen Strukturen 791 bis 795 nehmen jeweils eine Fläche von ca. 400 mm² ein und sind von einer entsprechend geformten elektrischen Leiterbahn einer Breite von 0,75 mm und einer Dicke von 10 μm und bei einer Beabstandung der Windungen von 0,28 mm gebildet. Die spulenförmige Struktur 791 bewirkt hierbei eine Dämpfung von 2,8 dB bei einer Resonanzfrequenz von 257 MHz, die Struktur 792 eine Dämpfung von 7,5 dB bei einer Resonanzfrequenz von 325 MHz, die Struktur 793 eine Dämpfung von 6,3 dB bei einer Resonanzfrequenz von 298 MHz, die Struktur 794 eine Dämpfung von 2,8 dB bei einer Resonanzfrequenz von 361 MHz und die Struktur 795 eine Dämpfung von 9,8 dB bei 210 MHz. Bezüglich der weiteren Schichten des Mehrschichtkörpers in dem die Strukturen 791 bis 795 vorgesehen sind, wird auf die vorhergehenden Ausführungsbeispiele verwiesen.

Fig. 3f zeigt weitere mehrere spulenförmige Strukturen 796, 797, 798, 799 und 800. Bei diesen spulenförmigen Strukturen sind jeweils ein oder mehrere Kurzschlusspfade zwischen benachbart liegenden Windungen der spulenförmigen Strukturen vorgesehen. Auch durch diese Massnahme ist es möglich, die Resonanzfrequenz sowie die Dämpfungseigenschaften der spulenförmigen Strukturen zu beeinflussen. Die spulenförmigen Strukturen 796 bis 800 weisen so in dem Ausführungsbeispiel nach Fig. 3f jeweils eine Flächenausdehnung von ca. 400 mm$^2$ auf und werden jeweils von einer Leiterbahn einer Breite von 0,75 mm und einer Dicke von 10 μm gebildet, bei einer Beabstandung der einzelnen Windungen von 0,28 mm. Die Struktur 796 weist hierbei eine Dämpfung von 5 dB bei einer Resonanzfrequenz von 271 MHz, eine Dämpfung von 8,5 dB bei einer Resonanzfrequenz von 418 MHz, eine Dämpfung von 8,3 dB bei einer Resonanzfrequenz von 473 MHz, eine Dämpfung von 13, 2 dB bei einer Resonanzfrequenz von 460 MHz und eine Dämpfung von 8,3 dB bei einer Resonanzfrequenz von 447 MHz auf.

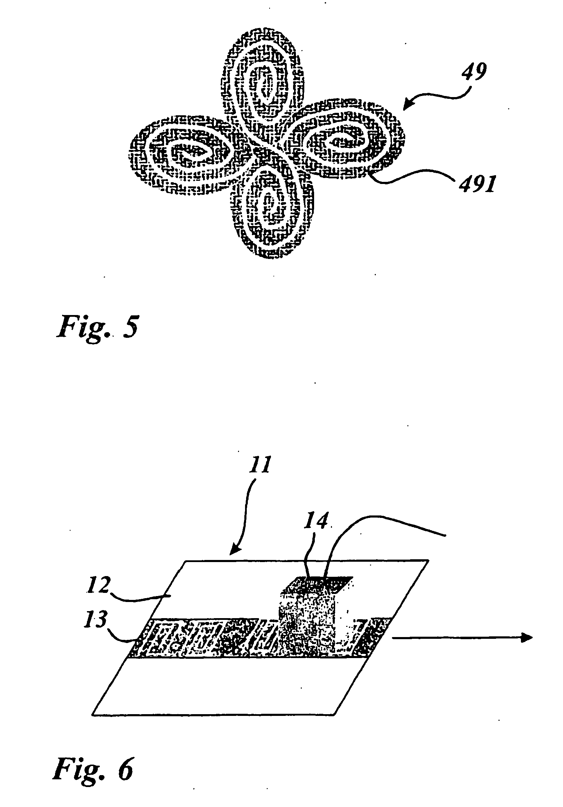

Weiter zeigt Fig. 5 beispielsweise vier elektrisch miteinander verbundene spulenförmige Strukturen, welche dem Betrachter eine optische Darstellung vermitteln.

Ein mögliches Verfahren zur Auslesung der maschinenlesbaren Codierung aus dem Sicherheitselement wird nun im Folgenden anhand von Fig. 6 erläutert:

Fig. 6 zeigt ein Sicherheitselement 11, auf dessen Trägersubstrat 12 ein streifenförmiges Sicherheitselement 13 appliziert ist. Das Sicherheitselement 13 ist wie das Sicherheitselement 2 nach Fig. 1 aufgebaut, wobei die spulenförmigen Strukturen gemäss der Ausführungsform nach Fig. 4 in Längsrichtung des Streifens in der metallischen Schicht des Sicherheitselements abgeformt sind. Ein Schreib-/Lesekopf wird nun in der angedeuteten Richtung in Längsrichtung des Sicherheitselements 13 über das Sicherheitselement 13 geführt. Der Schreib-/Lesekopf 14 enthält einen breitbandigen, durchstimmbaren RF-Sender sowie einen RF-Empfänger mit zugeordneter Auswerteelektronik. Von dem RF-Sender wird ein breitbandiges RF-Signal gesendet und anschliessend mittels des RF-Empfängers das von dem Sicherheitselement rückreflektierte RF-Signal empfangen und dann von der Auswerteelektronik ausgewertet. Das Frequenzspektrum des rückreflektierten RF-Signals wird hierbei von der Auswerteelektronik analysiert und sodann diejenigen Frequenzen bestimmt, in denen lokale Minima durch Resonanz einer der N spulenförmigen Strukturen bewirkt werden. Entsprechend des gewählten Codes wird sodann der Satz von Frequenzbändern, in denen jeweils ein lokales Minima ermittelt wurde, einem entsprechenden Codewort zugeordnet. Beim linearen Verfahren des Schreib/Lesekopfs 14 über das Sicherheitselement 13 wird so eine Abfolge von Codeworten aus dem Sicherheitselement ausgelesen, die dann beispielsweise zur Authentifizierung des Sicherheitsdokuments, u.U. in Kombination mit anderen, optisch aus dem Sicherheitsdokument 11 ausgelesenen Informationen verwendet werden.

**Patentansprüche**

1. Mehrschichtkörper (2), insbesondere Sicherheitselement zur Sicherung von Sicherheitsdokumenten (1), mit einer maschinell auslesbaren Codierung, wobei der Mehrschichtkörper (2) eine erste Schicht (24, 22) aus einem dielektrischen Material und eine zweite, partiell auf der ersten Schicht vorgesehene Schicht (23) aus einem elektrisch leitfähigen Material aufweist,
   **dadurch gekennzeichnet,**
   **dass** in einem ersten Flächenbereich (41 bis 45) die zweite Schicht (23) in Form einer Vielzahl N von Antennen-Strukturen (51 bis 56, 61 bis 66, 71 bis 78, 451 bis 456) ausgeformt ist, dass die N Antennen-Strukturen (51 bis 78; 451 bis 456) jeweils von einer spulenförmigen Struktur mit einer spulenförmig angeordneten Leiterbahn (511, 611) gebildet werden, dass die N Antennen-Strukturen benachbart zueinander angeordnet sind, dass die N Antennen-Strukturen jeweils unterschiedliche Geometrien und unterschiedliche, vorbestimmte Resonanzfrequenzen aufweisen und die maschinell auslesbare Codierung bereitstellen, und dass der Mehrschichtkörper (2) eine zumindest in einem Teilbereich des ersten Flächenbereichs (41) angeordnete optisch aktive Schicht (22) aufweist und die zweite Schicht (23) eine metallische Reflexionsschicht eines optisch wahrnehmbaren Sicherheitsmerkmals bildet und so zusätzlich eine Funktionsschicht des optisch wahrnehmbaren Sicherheitsmerkmals bildet .

2. Mehrschichtkörper (2) nach Anspruch 1,
   **dadurch gekennzeichnet,**
   **dass** mindestens ein Ende der Leiterbahn (511, 611) jeder der N spulenförmigen Strukturen (51 bis 78; 451 bis 456) elektrisch isoliert gegenüber benachbarten elektrisch leitfähigen Strukturen ausgebildet ist.

3. Mehrschichtkörper (2) nach einem der vorhergehenden Ansprüche,
   **dadurch gekennzeichnet,**
   **dass** benachbarte Antennen-Strukturen (61, 62) über eine elektrisch leitfähige Verbindung miteinander verbunden sind.

4. Mehrschichtkörper (2) nach einem der vorhergehenden Ansprüche,
   **dadurch gekennzeichnet,**
   **dass** zwei oder mehr der N Antennen-Strukturen (71 bis 78) ineinander angeordnet sind.

**5.** Mehrschichtkörper (2) nach einem der vorhergehenden Ansprüche,
**dadurch gekennzeichnet,**
**dass** die N Antennen-Strukturen (51 bis 62; 451 bis 456) in dem ersten Flächenbereich (41, 42, 45) in einer eindimensionalen oder zweidimensionalen Anordnung gemäss eines vorbestimmten Linienrasters bzw. Flächenrasters angeordnet sind.

**6.** Mehrschichtkörper (2) nach einem der vorhergehenden Ansprüche,
**dadurch gekennzeichnet,**
**dass** die unterschiedlichen, vorbestimmten Resonanzfrequenzen der N Antennen-Strukturen (51 bis 78; 451 bis 456) in einem Frequenzband von 15 MHz bis 1,5 GHz liegen.

**7.** Mehrschichtkörper (2) nach einem der vorhergehenden Ansprüche,
**dadurch gekennzeichnet,**
**dass** in einem oder mehreren zweiten Flächenbereichen (46 bis 48) die zweite Schicht ebenfalls in Form einer Vielzahl von Antennen-Strukturen (471 bis 476) ausgeformt ist, die benachbart zueinander angeordnet sind und unterschiedliche Geometrien und unterschiedliche vorbestimmte Resonanzfrequenzen aufweisen und ein oder mehrere weitere maschinell auslesbare Codierungen bereitstellen.

**8.** Mehrschichtkörper (2) nach Anspruch 7,
**dadurch gekennzeichnet,**
**dass** die ersten und zweiten Flächenbereiche (45 bis 48) in einer eindimensionalen oder zweidimensionalen Anordnung gemäss eines vorbestimmten Linienrasters bzw. Flächenrasters angeordnet sind.

**9.** Mehrschichtkörper (2) nach einem der Ansprüche 7 oder 8,
**dadurch gekennzeichnet,**
**dass** die ersten und zweiten Flächenbereiche jeweils in M Unterbereiche unterteilt sind, in denen jeweils gemäss der jeweils codierten maschinell auslesbaren Codierung eine dem jeweiligen Unterbereich zugeordnete spulenförmige Struktur vorgesehen ist oder nicht.

**10.** Mehrschichtkörper (2) nach einem der vorhergehenden Ansprüche,
**dadurch gekennzeichnet,**
**dass** die optisch aktive Schicht eine Schicht mit einem mikroskopischen oder makroskopischen Oberflächenrelief, insbesondere einem beugungsoptisch wirkenden Oberflächenrelief oder einem Oberflächenrelief in Form von Linsenstrukturen, Mattstrukturen oder Blaze-Gittern, eine Dünnfilmschicht, eine Flüssigkristallschicht oder eine Schicht mit optisch aktiven Pigmenten, insbesondere Effektpigmenten, UV- oder IRaktivierbaren Pigmenten ist.

**11.** Mehrschichtkörper (2) nach Anspruch 10,
**dadurch gekennzeichnet,**
**dass** in der optisch aktiven Schicht eine weitere, optisch auslesbare Codierung enthalten ist.

**12.** Mehrschichtkörper (2) nach einem der vorhergehenden Ansprüche,
**dadurch gekennzeichnet,**
**dass** in dem ersten Flächenbereich Teilbereiche der zweiten Schicht, in denen kein leitfähiges Material vorgesehen ist, eine Breitenabmessung von weniger als 300 $\mu$m aufweisen.

**13.** Mehrschichtkörper (2) nach einem der vorhergehenden Ansprüche,
**dadurch gekennzeichnet,**
**dass** der Mehrschichtkörper eine dritte Schicht aus einem elektrisch leitfähigen Material aufweist, wobei die dritte Schicht in einem Flächenbereich in Form einer Anzahl K von Antennen-Strukturen ausgeformt ist, dass die K Antennen-Strukturen benachbart zueinander angeordnet sind und dass die K Antennenspulen jeweils unterschiedliche Geometrien und unterschiedliche, vorbestimmte Resonanzfrequenzen aufweisen und zusammen mit den N Antennen-Strukturen der zweiten Schicht die maschinell auslesbare Codierung bereitstellen.

**14.** Sicherheitsdokument (1) mit einem Trägerkörper (10) und einem Sicherheitselement in Form eines Mehrschichtkörpers (2) nach einem der Ansprüche 1 bis 13.

**15.** Verfahren zum Auslesen einer maschinenlesbaren Codierung,
**gekennzeichnet durch**

die Schritte:

- Senden eines RF-Signals auf einen Mehrschichtkörper (2) nach einem der Ansprüche 1 bis 14,
- Empfangen eines von dem Mehrschichtkörper (2) reflektierten RF-Signals,
- Analyse des Frequenzspektrums des reflektierten RF-Signals und Bestimmung derjenigen N Frequenzbänder, in denen lokale Minima **durch** Resonanz einer der N Antennen-Strukturen (51 bis 78; 451 bis 456) bewirkt werden und
- Bestimmung eines zugeordneten Codewortes.

**Claims**

1. Multilayer body (2), in particular security element for the protection of security documents (1), having a machine-readable coding, wherein the multilayer body (2) has a first layer (24, 22) composed of a dielectric material and a second layer (23) composed of an electrically conductive material, said second layer being provided partially on the first layer,
**characterized**
**in that**, in a first area region (41 to 45), the second layer (23) is shaped in the form of a multiplicity N of antenna structures (51 to 56, 61 to 66, 71 to 78, 451 to 456) in that the N antenna structures (51 to 78; 451 to 456) are in each case formed by a coil-shaped structure having a conductor track (511, 611) arranged in a coil-shaped fashion, in that the N antenna structures are arranged adjacent to one another, in that the N antenna structures in each case have different geometries and different, predetermined resonant frequencies and provide the machine-readable coding and in that the multilayer body (2) has an optically active layer (22) arranged at least in a partial region of the first area region (41), and the second layer (23) forms a metallic reflection layer of an optically perceptible security feature and thus additionally forms a functional layer of the optically perceptible security feature.

2. Multilayer body (2) according to Claim 1,
**characterized**
**in that** at least one end of the conductor track (511, 611) of each of the N coil-shaped structures (51 to 78; 451 to 456) is embodied in a manner electrically insulated from adjacent electrically conductive structures.

3. Multilayer body (2) according to either of the preceding claims,
**characterized**
**in that** adjacent antenna structures (61, 62) are connected to one another via an electrically conductive connection.

4. Multilayer body (2) according to any of the preceding claims,
**characterized**
**in that** two or more of the N antenna structures (71 to 78) are arranged one in another.

5. Multilayer body (2) according to any of the preceding claims,
**characterized**
**in that** the N antenna structures (51 to 62; 451 to 456) are arranged in the first area region (41, 42, 45) in a one-dimensional or two-dimensional arrangement in accordance with a predetermined line grid or area grid.

6. Multilayer body (2) according to any of the preceding claims,
**characterized**
**in that** the different, predetermined resonant frequencies of the N antenna structures (51 to 78; 451 to 456) lie in a frequency band of 15 MHz to 1.5 GHz.

7. Multilayer body (2) according to any of the preceding claims,
**characterized**
**in that,** in one or a plurality of second area regions (46 to 48), the second layer is likewise shaped in the form of a multiplicity of antenna structures (471 to 476) which are arranged adjacent to one another and have different geometries and different predetermined resonant frequencies and provide one or a plurality of further machine-readable codings.

8. Multilayer body (2) according to Claim 7,
**characterized**

**in that** the first and second area regions (45 to 48) are arranged in one-dimensional or two-dimensional arrangement in accordance with a predetermined line grid or area grid.

9. Multilayer body (2) according to either of Claims 7 and 8,
    **characterized**
    **in that** the first and second area regions are in each case subdivided into M subregions, in each of which, in accordance with the respectively coded machine-readable coding, a coil-shaped structure assigned to the respective subregion is or is not provided.

10. Multilayer body (2) according to any of the preceding claims,
    **characterized**
    **in that** the optically active layer is a layer having a microscopic or macroscopic surface relief, in particular a surface relief having a defraction-optical effect or a surface relief in the form of lens structures, matt structures or blaze gratings, a thin-film layer, a liquid crystal layer or a layer having optically active pigments, in particular effect pigments, UV- or IR-activatable pigments.

11. Multilayer body (2) according to Claim 10,
    **characterized**
    **in that** a further, optically readable coding is contained in the optically active layer.

12. Multilayer body (2) according to any of the preceding claims,
    **characterized**
    **in that**, in the first area region, partial areas of the second layer in which no conductive material is provided have a width dimension of less than 300 $\mu$m.

13. Multilayer body (2) according to any of the preceding claims,
    **characterized**
    **in that** the multilayer body has a third layer composed of an electrically conductive material, wherein the third layer is shaped in an area region in the form of a number K of antenna structures, in that the K antenna structures are arranged adjacent to one another, and in that the K antenna coils in each case have different geometries and different, predetermined resonant frequencies and, together with the N antenna structures of the second layer, provide the machine-readable coding.

14. Security document (1) comprising a carrier body (10) and a security element in the form of a multilayer body (2) according to any of Claims 1 to 13.

15. Method for reading a machine-readable coding,
    **characterized by**
    the following steps:

    - transmitting an RF signal onto a multilayer body (2) according to any of Claims 1 to 14,
    - receiving an RF signal reflected from the multilayer body (2),
    - analyzing the frequency spectrum of the reflected RF signal and determining those N frequency bands in which local minima are brought about by resonance of one of the N antenna structures (51 to 78; 451 to 456), and
    - determining an assigned code word.

**Revendications**

1. Corps multicouche (2), en particulier élément de sécurité destiné à la protection de documents de sécurité (1), doté d'un codage lisible de manière mécanique, le corps multicouche (2) comportant une première couche (24, 22) faite d'un matériau diélectrique et une deuxième couche (23), prévue en partie sur la première couche (23) et faite d'un matériau électriquement conducteur,
    **caractérisé en ce que**,
    dans une première zone plane (41 à 45), la deuxième couche (23) a reçu la forme d'une pluralité N de structures d'antenne (51 à 56, 61 à 66, 71 78, 451 à 456), **en ce que** les N structures d'antenne (51 à 78 ; 451 à 456) sont formées chacune par une structure en forme de bobine avec un tracé conducteur disposé en forme de bobine (511, 611), **en ce que** les N structures d'antenne sont disposées dans le voisinage les unes des autres, **en ce que** les N structures d'antenne présentent chacune des géométries différentes et des fréquences de résonnance prédéfinies, différentes et fournissent le codage lisible de manière mécanique, et **en ce que** le corps multicouche (2) comporte une couche (22) optiquement active disposée au moins dans une zone partielle de la première zone plane (41) et la deuxième couche (23) forme une couche de réflexion métallique pour une caractéristique de sécurité optiquement perceptible et forme ainsi en plus une couche fonctionnelle pour la caractéristique de sécurité optiquement perceptible.

2. Corps multicouche (2) selon la revendication 1,
**caractérisé en ce**
**que**, au moins une extrémité du tracé conducteur (511, 611) de chacune des N structures en forme de bobine (51 à 78; 451 à 458) est formée pour être électriquement isolée par rapport à des structures électriquement conductrices voisines.

3. Corps multicouche (2) selon l'une quelconque des revendications précédentes,
**caractérisé en ce**
**que** des structures d'antenne (61, 62) voisines sont reliées entre elles par le biais d'une liaison électriquement conductrice.

4. Corps multicouche (2) selon l'une quelconque des revendications précédentes,
**caractérisé en ce**
**qu'**au moins deux des N structures d'antenne (71 à 78) sont imbriquées les unes dans les autres.

5. Corps multicouche (2) selon l'une quelconque des revendications précédentes,
**caractérisé en ce**
**que** les N structures d'antenne (51 à 62; 451 à 456) dans la première zone plane (41, 42, 45) sont disposées dans une disposition unidimensionnelle ou bidimensionnelle selon une trame prédéfinie linéaire respectivement planaire.

6. Corps multicouche (2) selon l'une quelconque des revendications précédentes,
**caractérisé en ce**
**que** les fréquences de résonnance prédéfinies, différentes, des N structures d'antenne (51 à 78; 451 à 456) sont situées dans une bande de fréquence de 15 MHz à 1,5 GHz.

7. Corps multicouche (2) selon l'une quelconque des revendications précédentes,
**caractérisé en ce**
**que**, dans une ou plusieurs deuxièmes zones planes (46 à 48), la deuxième couche a reçu également la forme d'une pluralité de structures d'antenne (471 à 476) qui sont disposées dans le voisinage les unes des autres et présentent des géométries différentes et des fréquences de résonnance prédéfinies différentes et fournissent un ou plusieurs autres codages lisibles de manière mécanique.

8. Corps multicouche (2) selon la revendication 7,
**caractérisé en ce**
**que** les première et deuxième zones planes (45 à 48) sont disposées dans une disposition unidimensionnelle ou bidimensionnelle selon une trame prédéfinie linéaire respectivement planaire.

9. Corps multicouche (2) selon l'une des revendications 7 ou 8,
**caractérisé en ce**
**que** les première et deuxième zones planes sont divisées en M sous-zones dans chacune desquelles, selon chaque codage codé lisible de manière mécanique, il est prévu ou non une structure en forme de bobine associée à chaque sous-zone.

10. Corps multicouche (2) selon l'une quelconque des revendications précédentes,
**caractérisé en ce**
**que** la couche optiquement active est une couche ayant un relief de surface microscopique ou macroscopique, en particulier un relief de surface avec un effet de diffraction optique ou un relief de surface en forme de structures de lentille, de structures dépolies ou de réseaux blazés, une couche mince, une couche de cristal liquide ou une couche avec des pigments optiquement actifs, en particulier des pigments à effet, des pigments activables par des rayonnements ultraviolets ou infrarouges.

**11.** Corps multicouche (2) selon la revendication 10,
**caractérisé en ce**
**qu'**un autre codage lisible de manière optique est contenu dans la couche optiquement active.

**12.** Corps multicouche (2) selon l'une quelconque des revendications précédentes,
**caractérisé en ce**
**que**, dans la première zone plane, des zones partielles de la deuxième couche, dans lesquelles il n'est pas prévu de matériau conducteur, présentent une largeur inférieure à 300 μm.

**13.** Corps multicouche (2) selon l'une quelconque des revendications précédentes,
**caractérisé en ce**
**que** le corps multicouche comporte une troisième couche faite d'un matériau électriquement conducteur, la troisième couche ayant reçu dans une zone plane la forme d'un nombre K de structures d'antenne, en ce que les K structures d'antenne sont disposées dans le voisinage les unes des autres et en ce que les K bobines d'antenne présentent chacune différentes géométries et différentes fréquences de résonnance prédéfinies et fournissent conjointement avec les N structures d'antenne de la deuxième couche le codage lisible de manière mécanique.

**14.** Document de sécurité (1) doté d'un corps support (10) et d'un élément de sécurité sous forme d'un corps multicouche (2) selon l'une des revendications 1 à 13.

**15.** Procédé pour lire un codage lisible de manière mécanique,
**caractérisé par**
les étapes consistant à :

- émettre un signal radiofréquence sur un corps multicouche (2) selon l'une des revendications 1 à 14,
- recevoir un signal radiofréquence réfléchi par le corps multicouche (2),
- analyser le spectre de fréquences du signal radiofréquence réfléchi et déterminer les N bandes de fréquences dans lesquelles des minima locaux sont produits par résonance d'une des N structures d'antenne (51 à 78; 451 à 456) et
- déterminer un mot codé associé.

**Fig. 1**

**Fig. 2**

**Fig. 3a**

**Fig. 3b**

**Fig. 3c**

**Fig. 3d**

_796_

_797_

_798_

_799_

_800_

**Fig. 3f**

_791_

_792_

_793_

_794_

_795_

**Fig. 3e**

*Fig. 4*

**Fig. 5**

**Fig. 6**

*Fig. 7*

*Fig. 8*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19601358 A1
- EP 1179811 A1
- US 2005280539 A1
- US 2002063156 A1
- US 6304169 B1
- CA 2191778 A1